Europäisches Patentamt

European Patent Office

Office européen des brevets

(11) Veröffentlichungsnummer: **0 076 424**
B1

# (12) EUROPÄISCHE PATENTSCHRIFT

(45) Veröffentlichungstag der Patentschrift:
02.05.85

(21) Anmeldenummer: 82108680.8

(22) Anmeldetag: 20.09.82

(51) Int. Cl.⁴: **H 02 P 7/28, H 02 P 5/16**

(54) Schaltungsanordnung zur Stromsteuerung eines Gleichstrommotors.

(30) Priorität: 05.10.81 DE 3139545

(43) Veröffentlichungstag der Anmeldung:
13.04.83 Patentblatt 83/15

(45) Bekanntmachung des Hinweises auf die Patenterteilung:
02.05.85 Patentblatt 85/18

(84) Benannte Vertragsstaaten:
AT DE FR GB IT

(56) Entgegenhaltungen:
DE - A - 3 037 877
GB - A - 2 064 899
US - A - 4 105 938

FUNKSCHAU, 1980, Heft 11, Seiten 87-90 und Heft 12, Seiten 79-80, München, DE. D. BLANK: "Der integrierte Schaltkreis NE 555"

(73) Patentinhaber: Siemens Aktiengesellschaft, Berlin und München Wittelsbacherplatz 2, D-8000 München 2 (DE)

(72) Erfinder: Leitgeb, Wilhelm, Dr. Dipl.-Ing., Martin-Luther-Strasse 26, D-8740 Bad Neustadt (DE)

ACTORUM AG

## Beschreibung

Die Erfindung betrifft eine Schaltungsanordnung zur Stromsteuerung eines Gleichstrommotors gemäss dem Oberbegriff des Patentanspruchs 1.

Eine solche Schaltungsanordnung ist durch offenkundige Vorbenutzung bekannt. Bei dieser Schaltungsanordnung ist als Zeitgeber ein Reihen-RC-Glied mit einem unveränderlichen ohmschen Widerstand vorgesehen. Der gemeinsame Verbindungspunkt von Kondensator und ohmschem Widerstand ist mit dem Eingang eines aus Operationsverstärkern bestehenden Verstärkerelementes verbunden. Zu dem Kondensator ist ein Transistor parallelgeschaltet, der bei Erreichen eines vorgegebenen maximalen Stromwertes durchgesteuert wird. Damit wird der Kondensator des Zeitgliedes über diesen Transistor entladen. Infolge des Durchsteuerns dieses Transistors verschwindet auch das Eingangssignal am Verstärkerelement, so dass das im Stromkreis des Motors liegende Halbleiterschaltelement zugesteuert wird. Der Motorstrom sinkt daraufhin ab und der zum Kondensator parallelliegende Transistor wird wieder gesperrt. Der Kondensator lädt sich nunmehr wieder über seinen Reihenwiderstand auf. Sobald die Spannung am Kondensator den Ansprechwert des Verstärkerelementes erreicht hat, steuert dieses das im Stromkreis des Motors liegende Halbleiterschaltelement wieder durch und der Motorstrom beginnt wieder zu steigen.

Bei der bekannten Schaltungsanordnung wird der Motorstrom jeweils auf einen Maximalwert begrenzt. Während der Sperrdauer des im Motorkreis liegenden Halbleiterschaltelementes sinkt der Strom ab, wobei keine Begrenzung auf einen bestimmten unteren Stromwert erfolgt. Da die bekannte Schaltungsanordnung zur Stromsteuerung eines gleichstromgespeisten Schrittmotors dient, kann ein solches freies Absinken des Stromes während der Sperrdauer des Halbleiterschaltelementes hingenommen werden. Dies ist nicht mehr möglich, wenn mit einer solchen Schaltungsanordnung eine Gleichstrommaschine mit veränderlicher Gegen-EMK gesteuert werden soll. Die Absinkgeschwindigkeit des Stromes hängt nämlich von der Grösse der Gegen-EMK bzw. der Drehzahl der Maschine ab. Je höher die Drehzahl der Maschine ist, desto grösser ist auch die Absinkgeschwindigkeit des Stromes. Das bedeutet, dass bei konstanter Sperrdauer des Halbleiterschaltelementes der Strom bei steigender Drehzahl immer stärker absinkt und dadurch der Wechselstromanteil im Maschinenstrom etwa proportional zur Drehzahl der Maschine ansteigt. Dem könnte man durch eine entsprechend kurz eingestellte Sperrdauer begegnen. Dies hätte aber zur Folge, dass bei niedrigen Drehzahlen infolge der hohen Taktfrequenz die für die betroffenen Schaltelemente zulässigen Höchstwerte überschritten werden.

Der Erfindung liegt die Aufgabe zugrunde, eine Schaltungsanordnung der eingangs beschriebenen Art mit wenig Aufwand so weiterzubilden, dass bei veränderlicher Drehzahl der Gleichstrommaschine die jeweils zulässigen Werte nicht überschritten werden.

Die Lösung der gestellten Aufgabe gelingt durch die im Kennzeichen des Anspruchs 1 angegebenen Merkmale. Durch die beschriebene selbsttätige Einstellung des Zeitgliedes wird erreicht, dass bei niedrigen Drehzahlen die Sperrdauer des Halbleiterschaltelementes entsprechend lang und damit die Taktfrequenz niedrig ist, so dass die für die Schaltelemente zulässigen Höchstwerte (Schaltverluste) nicht überschritten werden. Mit steigender Drehzahl wird die Sperrdauer immer mehr verkürzt, so dass das Absinken des Stromes entsprechend begrenzt wird und damit der Wechselstromanteil im Maschinenstrom in den zulässigen Grenzen bleibt.

Eine der Motordrehzahl umgekehrt proportionale Einstellung des Zeitgliedes wird auf einfache Weise dadurch erreicht, dass das Zeitglied aus einem lichtempfindlichen Halbleiterschaltelement und einem dazu in Reihe liegenden Kondensator besteht und dem lichtempfindlichen Schaltelement eine von der Motor-EMK gespeiste Leuchtdiode zugeordnet ist. Mit steigender Drehzahl d.h. mit steigender Gegen-EMK strahlt die Leuchtdiode stärker, so dass das lichtempfindliche Halbleiterschaltelement stärker durchgesteuert und der Kondensator schneller aufgeladen wird. Die Kondensatorspannung erreicht mit steigender Drehzahl schneller den Ansprechwert des Verstärkerelementes, welches somit in entsprechend kürzeren Abständen das im Motorstromkreis liegende Halbleiterschaltelement wieder aufsteuert.

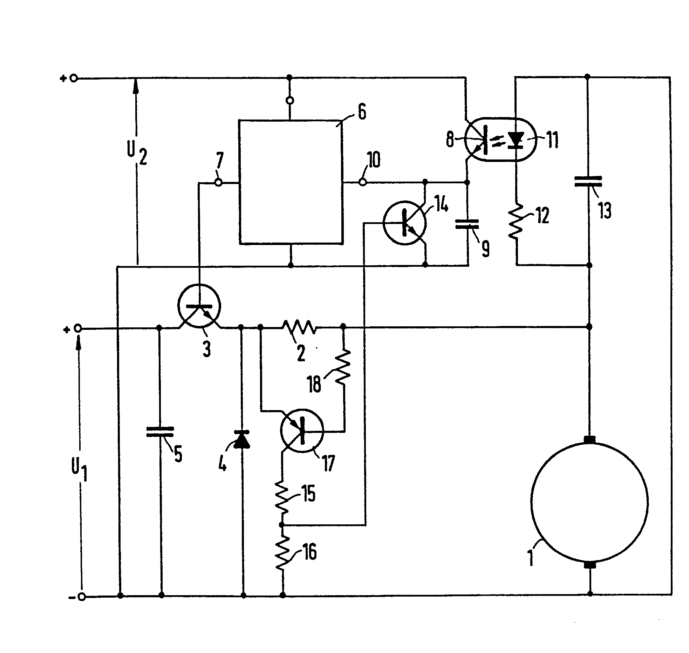

Anhand eines in der Zeichnung dargestellten Ausführungsbeispiels wird der Anmeldungsgegenstand nachfolgend näher beschrieben.

Eine Gleichstrommaschine 1 ist über einen Vorwiderstand 2 und ein als Haupttransistor 3 ausgebildetes steuerbares Halbleiter schaltelement an eine Gleichspannungsquelle U1 angeschlossen. Zu dem Vorwiderstand 2 und der Gleichstrommaschine 1 liegt eine Freilaufdiode 4 parallel. Ferner ist an die Klemmen der Gleichspannungsquelle U1 ein Blockkondensator 5 angeschlossen.

Der Haupttransistor 3 wird durch ein elektronisches Verstärkerelement 6 gesteuert. Hierzu ist die Basis des Haupttransistors 3 mit dem Ausgang 7 des elektronischen Verstärkerelementes 6 verbunden. Als elektronisches Verstärkerelement kann beispielsweise ein integrierter Schaltkreis NE555 verwendet werden, wie er in der Zeitschrift „Funkschau" 1980, S. 87 bis 90, beschrieben wird. Das Verstärkerelement 6 wird durch eine Hilfsgleichspannung U2 gespeist. An der Hilfsgleichspannung U2 liegt ferner die Reihenschaltung eines lichtempfindlichen Halbleiterschaltelementes 8 mit einem Kondensator 9. Der gemeinsame Verbindungspunkt des Kondensators 9 und des lichtempfindlichen Halbleiterschaltelementes 8 ist mit dem Steuereingang 10 des Verstärkerelementes 6 verbunden. Dem lichtempfindlichen Halbleiterschaltelement 8 ist eine Leuchtdiode 11 zugeordnet, die mit einem Schutzwiderstand 12 in Reihe liegt. Die Reihenschaltung der Leuchtdiode 11 und des Schutzwiderstandes 12 ist an die Klemmen der Gleichstrommaschine 1 angeschlossen, wobei die Polung der Leuchtdiode 11 so gewählt ist, dass die Gegen-EMK der Gleichstrommaschine einen Strom durch den Reihenkreis von Leuchtdiode 11 und Schutzwiderstand 12 treiben kann. Zu der Leuchtdiode 11 und dem Schutzwiderstand 12 ist ein Glättungskondensator 13 parallelgeschaltet.

Zu dem mit dem lichtempfindlichen Halbleiterschaltelement 8 in Reihe liegenden Kondensator 9 ist die Emitter-Kollektor-Strecke eines Überbrückungstransistors 14 parallelgeschaltet. Die Basis dieses Überbrückungstransistors 14 ist an einen aus zwei Teilwiderständen 15 und 16 bestehenden Spannungsteiler angeschlossen. Dieser Spannungsteiler wird über einen weiteren zur Erfassung eines vorgegebenen Maximalstromwertes der Gleichstrommaschine 1 dienenden Transistor 17 gesteuert. Der Transistor 17 ist mit seinem Emitter an den gemeinsamen Verbindungspunkt des Haupttransistors 3 und des Vorwiderstandes 2 angeschlossen. Die Basis des Transistors 17 liegt über einem Basiswiderstand 18 an dem gemeinsamen Verbindungspunkt des Vorwiderstandes 2 mit der Gleichstrommaschine 1. Der aus den Teilwiderständen 15 und 16 bestehende Spannungsteiler liegt zwischen dem Minuspol der Gleichspannungsquelle U1 und dem Kollektor des Transistors 17.

Die Schaltungsanordnung arbeitet wie folgt: Die am Eingang 10 des elektronischen Verstärkerelementes 6 anliegende Spannung des Kondensators 9 bewirkt, dass am Ausgang 7 des elektronischen Verstärkerelementes 6 ein Steuersignal ansteht, welches den Haupttransistor 3 durchsteuert. Damit fliesst in dem Motorstromkreis ein Strom, der an dem Vorwiderstand 2 einen Spannungsabfall hervorruft. Steigt der Strom im Motorkreis so weit an, dass der Spannungsabfall an dem Vorwiderstand 2 der Emitter-Basis-Spannung des Transistors 17 entspricht, so wird dieser Transistor durchgesteuert und damit der Spannungsteiler 15, 16 an die Gleichspannungsquelle U1 geschaltet. Dies hat zur Folge, dass der mit seiner Basis an dem Spannungsteiler 15, 16 angeschlossene Überbrückungstransistor 14 ebenfalls durchgesteuert wird. Hierdurch wird der Eingang 10 des elektronischen Verstärkerelementes 6 auf Minuspotential geschaltet, so dass das Steuersignal an seinem Ausgang 7 verschwindet und der Haupttransistor 3 gesperrt wird. Gleichzeitig wird der Kondensator 9 über den Überbrückungstransistor 14 entladen. Das Sperren des Haupttransistors 3 hat ein Absinken des Stromes im Motorstromkreis zur Folge. Die an dem Vorwiderstand 2 abfallende Spannung sinkt wieder unter den Wert der Emitter-Basis-Spannung des Transistors 17, so dass dieser wieder gesperrt wird. Damit ist der Spannungsteiler 15, 16 wieder abgeschaltet und der Überbrückungstransistor 14 geht wieder in seinen Sperrzustand. Nach dem Sperren des Überbrückungstransistors 14 lädt sich der Kondensator 9 über das lichtempfindliche Halbleiterschaltelement 8 wieder auf. Sobald die Spannung am Kondensator 9 den Ansprechwert des elektronischen Verstärkerelementes erreicht hat, erscheint an dessen Ausgang 7 wieder ein Steuersignal, welches den Haupttransistor 3 aufsteuert.

Die Geschwindigkeit der Aufladung des Kondensators 9 und damit die Zeitdauer bis zum Erreichen des Ansprechwertes des Verstärkerelementes 6 hängt von dem Durchsteuergrad des lichtempfindlichen Halbleiterschaltelementes 8 ab. Das lichtempfindliche Halbleiterschaltelement wird in Abhängigkeit von der Leuchtstärke der Leuchtdiode 11 mehr oder weniger stark durchgesteuert. Da die Leuchtdiode 11 von der Gegen-EMK der Gleichstrommaschine 1 gespeist wird, ist deren Leuchtstärke ein Mass für die Gegen-EMK. Dementsprechend wird auch das lichtempfindliche Halbleiterschaltelement 8 in Abhängigkeit von der Grösse der Gegen-EMK mehr oder weniger stark durchgesteuert.

Bei niedriger Drehzahl und damit niedriger Gegen-EMK leuchtet die Leuchtdiode 11 nur schwach und das lichtempfindliche Halbleiterschaltelement ist nur wenig durchgesteuert. Damit wird der Kondensator 9 nur langsam aufgeladen und es dauert entsprechend lange, bis die Kondensatorspannung den Ansprechwert des elektronischen Verstärkerelementes 6 erreicht. Damit ist auch der Haupttransistor 3 entsprechend lange gesperrt. Steigt die Gegen-EMK infolge zunehmender Drehzahl an, so führt dies zu einem stärkeren Leuchten der Leuchtdiode 11. Das lichtempfindliche Halbleiterschaltelement 8 wird stärker durchgesteuert und der Kondensator 9 kann sich schneller aufladen. Das elektronische Verstärkerelement 6 erhält damit schon nach einer wesentlich kürzeren Zeit wieder ein Durchsteuersignal und steuert dann über ein Signal an seinem Ausgang 7 wieder den Haupttransistor 3 auf. Da der Haupttransistor 3 bei zunehmender Drehzahl in immer kürzeren Abständen aufgesteuert wird, kann der Strom im Motorkreis trotz grösserer Steilheit nur bis zu einem durch die Sperrdauer des Haupttransistors 3 bestimmten Wert absinken. Auf diese Weise kann der Wechselstromanteil im Motorstrom auf zulässige Werte begrenzt werden.

## Patentansprüche

1. Schaltungsanordnung zur Stromsteuerung eines Gleichstrommotors (1), bei welcher Anordnung mindestens ein über ein elektronisches Verstärkerelement (6) steuerbares Halbleiterschaltelement (3) in dem mit einer Freilaufdiode (4) versehenen Stromkreis des Gleichstrommotors (1) angeordnet ist, das bei Erreichen eines vorgegebenen maximalen Stromwertes zugesteuert ist, bei welcher Anordnung ferner dem Verstärkerelement (6) ein bei Erreichen des maximalen Stromwertes anlaufendes Zeitglied (8, 9) zugeordnet ist, durch dessen an das Verstärkerelement (6) abgegebenes Steuersignal ein Aufsteuern des Halbleiterschaltelementes (3) bewirkt ist, dadurch gekennzeichnet, dass das Zeitglied (8, 9) in Abhängigkeit von der Motordrehzahl derart einstellbar ist, dass die Zeitdauer vom Anlaufen des Zeitgliedes (8, 9) bis zur Abgabe des Steuersignals an das Verstärkerelement (6) zur Drehzahl des Motors (1) umgekehrt proportional ist.

2. Schaltungsanordnung nach Anspruch 1, dadurch gekennzeichnet, dass das Zeitglied aus einem lichtempfindlichen Halbleiterschaltelement (8) und einem dazu in Reihe liegenden Kondensator (9) besteht und dem lichtempfindlichen Halbleiterschaltelement (8) eine von der Motor-EMK gespeiste Leuchtdiode (11) zugeordnet ist.

## Claims

1. D.C. motor current control circuit for a motor (1), having in the motor circuit at least one semiconductor switching element (3) controllable by means of an electronic amplifier stage (6), a free-running diode (4) being provided across the motor (1), and the electronic amplifier stage being controlled when a predetermined maximum current level is reached, the amplifier element (6) being further assigned a timing element (8, 9) which starts when the maximum current level is reached and transmits a control signal to the amplifier element (6) for controlling the semiconductor switching element (3), characterised in that the timing element (8, 9) is adjustable in dependence upon the motor speed in such a manner that the duration from the start of the timing element (8, 9) to the transmission of the control signal to the amplifier stage (6) is inversely proportional to the speed of the motor (1).

2. A circuit as claimed in Claim 1, characterised in that the timing element consists of a light-sensitive semiconductor switching element (8) with a capacitor (9) connected in series, and the light-sensitive semiconductor switching element (8) is assigned a fluorescence diode (11) which is fed from the motor EMF.

## Revendications

1. Montage pour commander le courant absorbé par un moteur à courant continu (1), montage où le circuit, muni d'une diode de roue libre (4), dans lequel circule le courant du moteur à courant continu (1) contient au moins un élément semi-conducteur de commutation (3) qui est commandé par un élément électronique amplificateur (6) et est bloqué lorsque l'intensité du courant atteint une valeur maximale préfixée, et où l'élément amplificateur (6) reçoit un signal de commande pour rendre l'élément semi-conducteur de commutation (3) conducteur d'un élément de temporisation (8, 9) conjugué à l'élément amplificateur (6) et qui commence à fonctionner lorsque l'intensité du courant atteint la valeur maximale, caractérisé en ce que l'élément de temporisation (8, 9) est réglable, en fonction de la vitesse de rotation du moteur, de manière que la durée du début du fonctionnement de l'élément de temporisation (8, 9) jusqu'à la délivrance du signal de commande à l'élément amplificateur (6) soit inversement proportionnelle à la vitesse de rotation du moteur (1).

2. Montage selon la revendication 1, caractérisé en ce que l'élément de temporisation est constitué d'un élément semi-conducteur de commutation (8), qui est photosensible, et d'un condensateur (9) monté en série avec cet élément et en ce qu'une diode luminescente (11) alimentée par la force contre-électromotrice du moteur est conjuguée à l'élément de commutation photosensible (8).